Europäisches Patentamt

European Patent Office

Office européen des brevets

(11) Publication number: **0 023 145**
**B1**

(12) **EUROPEAN PATENT SPECIFICATION**

(45) Date of publication of patent specification: **16.05.84**

(21) Application number: **80302448.8**

(22) Date of filing: **18.07.80**

(51) Int. Cl.³: **A 01 K 63/02, B 60 P 3/20**

(54) Method of transporting a load of living shell-fish and apparatus usable in such transportation.

(30) Priority: **20.07.79 GB 7925330**

(43) Date of publication of application:
**28.01.81 Bulletin 81/04**

(45) Publication of the grant of the patent:
**16.05.84 Bulletin 84/20**

(84) Designated Contracting States:
**AT BE CH DE FR GB IT LI LU NL SE**

(56) References cited:
**DE-C- 534 755**
**DE-U-1 784 001**
**FR-A-2 081 076**
**GB-A-1 488 311**
**US-A-1 891 779**
**US-A-2 286 146**
**US-A-3 306 256**
**US-A-3 727 579**

(73) Proprietor: **E M WILCOX LIMITED**
**Royce Road Carr Road Industrial Estate**
**Peterborough (GB)**

(72) Inventor: **Prigmore, Edward William**
**Birch Farm**
**Raunds Northants (GB)**

(74) Representative: **Main, Peter Stephen et al**
**HYDE, HEIDE & O'DONNELL 146 Buckingham**
**Palace Road**
**London SW1W 9TR (GB)**

Courier Press, Leamington Spa, England.

## Description

This invention relates to a method of transporting a load of shell-fish destined for the food market, wherein the shell-fish are carried in a container in which they are provided with sea water kept under cooled and aerated conditions for maintaining life.

It is well known that in order to keep fish or crustaceans alive in a storage container for any appreciable time it is necessary to maintain the creatures in an aerated water environment under controlled temperature conditions.

GB—A—1 488 311 describes an installation for transporting living fish, comprising an insulated tank incorporating a refrigerating coil and a pump for circulating water from the top portion of the tank to its bottom portion via a localised vertical duct into which oxygen gas is introduced through a supply pipe so that the oxygen is divided into microbubbles by the pump and mixed with the circulating liquid to form an homogeneous mixture of liquid and oxygen. A diffuser is fitted over the outlet of the oxygen supply pipe. The aim is in this way to obtain a uniform and smooth oxygenation of the whole liquid volume inside the tank.

GB—A—1 488 311 does not refer to the storage of live shell-fish and the installation which it describes would be of little value for that purpose. In particular, the combined refrigeration and oxygenation conditions would be incapable of preventing high mortality if attempt were made to transport a bulk load of live crabs or lobsters in the tank on a journey of some days duration.

It is well known how to keep lobsters and crabs alive for long periods of time in coastal storage units but the economic transportation of such shell-fish in live condition for meeting volume market demands involves problems which increase not only with the residence time in the transporter but also with the storage density of the shell-fish.

The problem of sustaining life is illustrated by the fact that in coastal storage units in which lobsters are kept alive in running sea water it has been found necessary for keeping the catch alive at 55°F (13°C) to pump over 455 litres of fresh sea water through the unit per hour per 45.4 Kg of lobsters.

US—A—2 286 146 proposes to transport live crustaceans such as lobsters in a container in which the crustaceans are immersed in water which is circulated through a cooling unit located in the container and to keep the water aerated by a surface propeller. This method would not be suitable for long distance transportation of large loads of live lobsters or crabs with a high storage density because the oxygen demands of the crustaceans at the attainable degree of water cooling could not be satisfied sufficiently to avoid high mortality.

In GB—A—969 030 it is proposed to keep caught lobsters alive in storage units in which lobsters are held in stacked trays: In one such method, a sea water circulating system is employed whereby sea water is cascaded through the stack so as to maintain a shallow pool of water in each tray whereby the lobsters are kept in a state of partial immersion. The cascaded sea water is collected and recycled to the storage space via a refrigerating unit. The water is aerated by periodically allowing water to drain from the trays to allow additional air to enter the storage spaces so that it becomes forced into the drainage reservoir from which recirculation of water takes place when the water circulating pump is re-started. The specification states that aeration can alternatively be effected by means of a vaned pump impeller which sucks air into the water as it is expressed through the pump casing. This method would not be suitable for prolonged storage of crabs, which require to be totally immersed, and the method is very unsuitable for use during transportation because of the inevitable sloppage of water. The method is intended primarily for relatively small volume, static storage units.

US—A—3 727 579 also describes a method of storing live lobsters for transportation. In that method the lobsters are located on foraminous trays arranged in tiers in containers having insulating walls which may, e.g. comprise insulating material sandwiched between inner and outer metal skins, and the lobsters are continuously sprayed with refrigerated and aerated salt water which is pumped from a storage reservoir. This storage method is also intended for small volume storage units. For large volume storage, a plurality of the storage units fitted with the trays and spray nozzles are used as a battery, connected to a common aerated water supply and refrigeration plant. The method would be very expensive to perform. This method also would be incapable of application to the prolonged storage of crabs.

Prior to this invention the need for an effective economical method of transporting loads of live shell-fish, particularly crabs and lobsters, to inland market depots very remote from the landing site has remained unfulfilled notwithstanding that expert attention has been given to the problems involved with a view to finding a satisfactory solution.

The present invention provides a method which is much better suited than those hitherto proposed, for transporting large loads of live shell-fish under high density storage condition. An objective in view when the invention was made was to carry a load of at least 1016 Kg of crabs or at least 152 Kg of lobsters on a road vehicle at a storage density of at least 178 g of shell-fish per litre of water, and to retain the shell-fish under such storage conditions for a period of several days with sufficiently low mortality to make the method commercially profitable. The method according to the invention enables this objective to be achieved, and in fact it is capable of application to satisfy conditions which are even more stringent, as will hereafter be exemplified.

The method according to the invention is broadly defined in claim 1 hereof.

The method according to the invention combines total immersion of the shell-fish with skin-cooling of the container in which the load is held, and with aeration of the water by means of ascending streams of air bubbles distributed through the entire volume of the water. By combining these features it has been found possible to achieve remarkably good results, assessed in economic terms. The method can easily be performed during overland transportation of the container, for example, on a road vehicle. It is not essential for any circulation of the sea water outside the container to take place, although this circulation can be effected, e.g. for the purpose of passing the water through a filtration unit, should circumstances make this necessary or desirable.

By this method shell-fish can be kept alive in the container during transportation overland for several days, with an appreciably higher storage density/mortality ratio than hitherto possible at comparable cost. Tests have shown that even spider crabs, which it has hitherto proved impossible economically to transport in live condition to inland markets, can by a method according to the invention be transported live in loads of several thousand kilograms at a storage density of 238 grams per litre of sea water and with a mortality of less than 10% even over a period of 5 days, provided the temperature of the water is properly controlled and the oxygenation rate effected by the forcing of air into the water (or another oxygen-containing gas in lieu thereof) is sufficiently intense.

Because the shell-fish can be kept alive in the container for relatively long periods of time the container can remain at a quayside for loading at intervals of time with successive catches of shell-fish, and moved away only when it has a full load, so making the most efficient use of the transport service.

The most suitable temperature of the water for a given species depends on the oxygenation rate and vice versa. The temperature range within which the water should be kept must depend in each case partly on the nature of the stored species and should, preferably be as low as possible within that range. Other things being equal, the lower the temperature of the water the lower is the oxygenation rate necessary for keeping the mortality below a certain level for a given length of time. For achieving the best results from the invention the refrigeration system is preferably operated to maintain the water temperature in the container below the temperature of the normal sea water of the shell-fish in the summer fishing season.

The temperature of the sea water during containment of the shell-fish is preferably maintained between 5°C and 12°C and most preferably between 8°C and 12°C. This is appreciably below the temperature of the water environment of the crustaceans during the summer fishing season. It is important that they are not subjected to abrupt and marked temperature changes and at least when caught under summer temperature conditions the animals should be placed in sea water at a temperature in the region of that from which they were extracted and the temperature then gradually lowered to the desired storage temperature within the above range. This temperature adjustment can be made in the transportation container itself or in separate tanks from which the animals are then transferred to the container.

Preferably the air supply to the discharge orifices is cooled directly or indirectly by the refrigeration system before the air enters the water in the container.

The oxygen content of the sea water measured at the surface zone of the water in the container should generally be maintained above 60% of the saturation value at the prevailing water temperature and it is preferable for this oxygen content to be kept above 70%. The oxygenation rate which is necessary to sustain this level depends on the storage density of the shell-fish and on the temperature.

Preferably the method is carried out for transporting a load of shell-fish at a storage density in the container of at least 119 g and most preferably at least 178 g weight of shell-fish per litre of water. When transporting large loads at that density the potential economic benefits of the invention are realised to a favourable extent. Generally speaking, the carrying of loads larger than 1016 Kg of crabs or larger than 152 Kg of lobsters is desirable for achieving the highest cost effectiveness of the method. Loads up to 1016 Kg of crabs can be economically carried by a method according to the invention. Tests have shown that 544 Kg of live spider crabs stored at a density of 900 g per litre of water can be kept alive with very low mortality, for up to five days in sea water at 10°C by injecting 2080 L of cooled air into the water per hour.

As already indicated the water can be circulated through the container during the storage period and filtration means can be employed for removing organic material. This re-circulation and filtration will in some cases be desirable if the shell-fish are not held for a short period in temporary storage tanks or pools to allow stomach evacuation prior to loading of the shell-fish into the transportation container.

In certain embodiments of the invention the shell-fish load is composed of relatively small quantities held separated in removable receptacles which are of openwork construction so that the shell-fish in the receptacles are exposed to the water in which the receptacles are immersed. Preferably the individual quantities are not more than 13.6 to 20.4 Kg in weight. The receptacles can for example be in the form of open-work boxes or baskets. These may be made of plastics material. The receptacles are preferably formed so that they interengage when stacked.

In preferred embodiments of the invention the shell-fish are held en masse within the water i.e. they are confined only by the walls of the container defining the load space. Such methods have the advantage that the period of time between landing of the shell-fish and their entry into sea water in the container is shorter, because the shell-fish are not first loaded into boxes or baskets. It may be advantageous however, depending on the size of the container and of the load, for the load space in the container to be divided into compartments by partitions in order to ensure that a satisfactory distribution of the load over the plan area of the container is maintained.

The refrigeration system can be of the compression/expansion type, or the said passageways can be coupled to a source of liquefied gas.

The container can be of any required form suitable for its intended use and mode of transportation. It is particularly advantageous for the container to form an integral load-carrying body of a vehicle or a vehicle trailer e.g. a semi-trailer, or to form a demountable vehicle load container of the roll-on/roll-off type.

Particularly for use in transporting live shell-fish held in stacked boxes within the container as hereinbefore described, it is very suitable for the container to have one or more top hatches and for its height and the level to which it is filled with water to be such that a person can stand in the water in the container and unload receptacles containing shell-fish, via said hatch(es).

The container used in a method according to the invention can form a tipping body of a load-carrying vehicle and have a sealable tail end discharge opening. A refrigerated tipping body vehicle is described and claimed in our EP—A—0 005 353, published after the priority date of this invention.

The invention includes apparatus suitable for use in transporting a load of living shell-fish comprising a transportable thermally insulated container having a heat-conducting skin exposed to the interior of the container, and refrigeration and aeration systems, characterised in that the refrigeration system is of skin-cooling type comprising passageways extending along and in heat-conducting relationship to said heat conducting skin and means for causing fluid refrigerant to flow along said passageways; and in that the aeration system comprises a multiplicity of air discharge orifices distributed over the bottom area of the container and means for supplying air to such orifices from outside the container.

Such apparatus is adapted to perform the transportation method and give the related advantage hereinbefore described.

Such apparatus can incorporate any of the optional features, e.g. water-circulation means, required for making use of any of the optional features of the method hereinbefore described.

Apparatus according to the invention can be used not only in carrying out a transportation method according to the invention as hereinbefore defined, but also for other purposes. For example the apparatus can be used without operating the oxygenating system for carrying fish which must be kept in good edible condition but need not be kept alive. Said apparatus can also be used, with or without operating the oxygenation system, for carrying other kind of materials, e.g. foodstuffs of various kinds.

Certain embodiments of the invention will now be described by way of example with reference to the accompanying diagrammatic drawings in which:

Fig. 1 is a general view of a container forming part of an apparatus according to the invention;

Fig. 2 is a fragmentary sectional view of part of a side wall of the container;

Fig. 3 is a fragmentary sectional view of part of the bottom wall of the container; and

Fig. 4 shows the oxygenation system associated with the container.

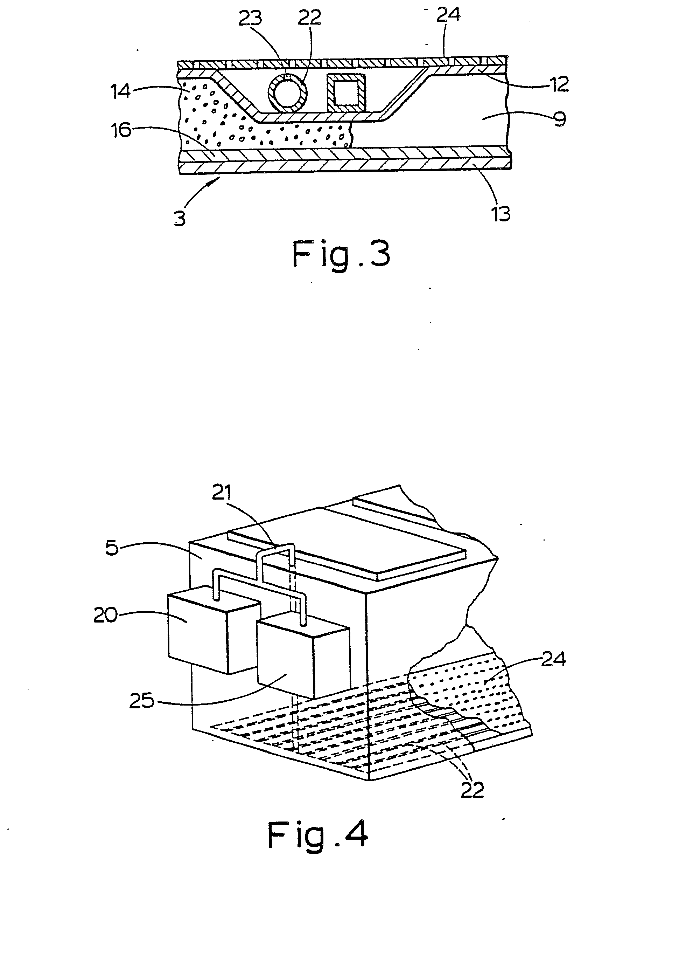

the illustrated container is of elongate rectanguloid form, having opposed side walls 1 and 2, a bottom wall 3 (Fig. 3) end walls 4, 5 and a top wall 6. The bottom, side and end walls together define a water-tight load-carrying space. The top wall 6 is provided with hatches fitted with removable sealing covers 7.

The container is constructed almost entirely from sheet aluminium alloy of a specification within British Standard Specification 1470. Each of the top, bottom, side and end walls is double-skinned and rigidity is imparted to the structure by a system of between-skin ribs such as 8, 9 which extend over the height and width of the container at intervals along its length, and ribs such as 10 which extend along the horizontal corner edges of the body. The various ribs are hollow and formed by strips of aluminium, bent to channel section and welded to the skins.

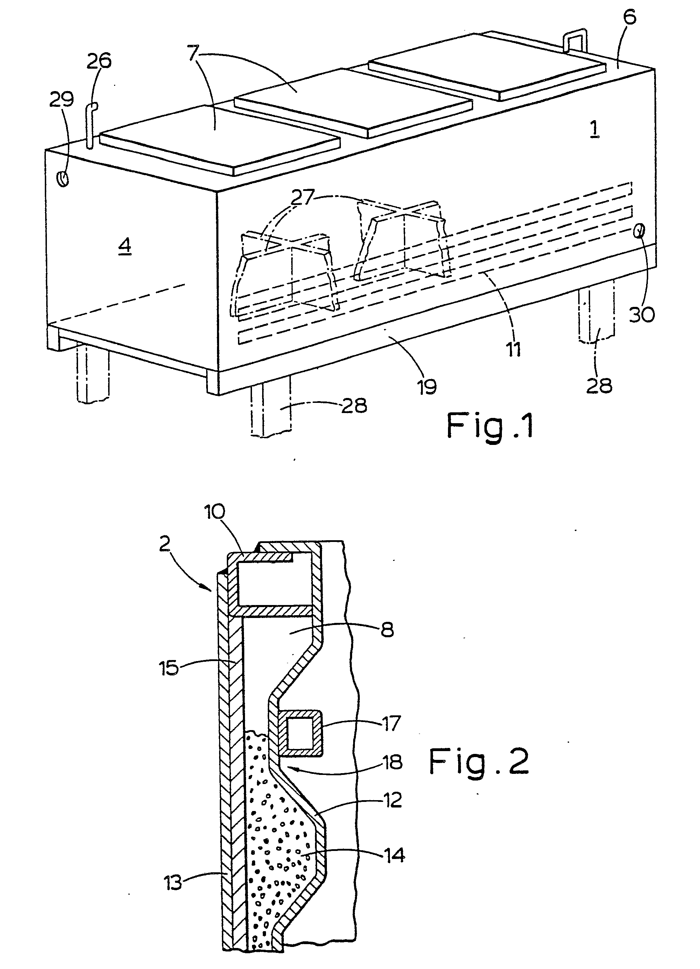

The container is provided with five cooling coils located one on the bottom wall of the container and two against each of its side walls. The two cooling coils at each side are disposed one above the other. Fig. 1 shows in broken lines the path of one of the cooling coils designated 11, at the nearer side wall of the container.

The walls of the container comprise inner and outer aluminium skins 12, 13 which are welded to the ribs 8, 9 and 10. Thermally insulating material 14 (Fig. 2) is disposed between the inner and outer skins of each wall so as substantially to fill the inner-skins space and layers of wood 15, 16 are disposed between the outer skin and the said ribs. In Figs. 2 and 3 the thermal insulation 14 has been shown partly broken away to expose the vertical ribs 8, 9. A very suitable thermally insulating material 14 is polyurethane foam. Quantities of such insulating material are also disposed within the hollow ribs 8.

Fig. 2 shows lengths of tubing 17 which make up part of the upper cooling coil of the side wall 2. The tubing is formed of HE30 WP TB aluminium alloy (British Standard Specification 1470). The tubing is of square or rectangular cross-section providing a flat face which is located in contact with the inner skin 12. The inner face of the side wall is profiled to provide spaced horizontal channels such as 18 in which the tubing is located. The tubing is clamped to the inner skin by clamping strips (not shown) disposed at intervals along the courses of the tubing. Elastically deformable material is disposed between each clamping strip and the tubing so that the tubing is firmly clamped against the inner skin but small relative movements between the tubing and the inner skin can take place in consequence of differential thermal expansion and contraction.

The end and top walls 4, 5 and 6 of the container are of similar double-skin heat-insulated construction but are without cooling coils.

The cooling coils are connected with a refrigeration plant (not shown) of a type known per se, which plant may for example be as described and illustrated in EP—A—0 005 353 hereinbefore referred to.

Instead of using a refrigeration system of the compression and expansion type, the cooling coils may be coupled with one or more reservoirs of liquefied gas, e.g. liquefied nitrogen, from which coolant is released and caused to flow in vaporised condition through the coils.

The refrigeration plant or coolant reservoir may be connected to the load-carrying container, e.g. to a container-supporting sub-frame 19, so that the container and refrigeration plant or coolant reservoir can be handled as a unit. Alternatively such plant or reservoir may be mounted separately from the container, for example on a vehicle for carrying the container.

The illustrated container is also equipped with means for oxygenating water in the load-carrying body. This system comprises a motor-driven air pump or compressor 20 (Fig. 4) mounted externally of the container at one end thereof. The outlet of this power source is connected to a duct 21 which passes through the top wall of the container to its interior where it is connected to ducts 22 (Figs. 3 and 4) which extend along the bottom of the container. As shown in Fig. 3, these ducts, like tubing 23 forming part of the bottom cooling coil of the container, are disposed in channels defined by the inner skin 12 of the bottom wall. Along each of the ducts 22 there is a series of orifices such as 23 for the discharge of air along the whole length of the container. Above the inner skin 12 of the bottom wall there is perforated plating 24 acting as a diffuser for promoting good distribution of air over the load-carrying area.

The compressor 20 may be driven by a small internal combustion engine and an electrically driven compressor 25 may be provided for stand-by use, powered e.g. by a power pack on the vehicle or by an extraneous power source.

An air vent 26 (Fig. 1) is provided at the top of the container to avoid build up of air pressure over the load in the container.

The interior of the container can be fitted with partitions, e.g. like partitions 27 shown in broken line in Fig. 1, which divide the interior of the container over part of its height into compartments. This can be useful for distinguishing different parts of a load and (if the animals are loose) for keeping the load well distributed through the load space.

If the container is used for transporting shellfish held in boxes stacked within the container, the boxes can be unloaded via the top hatches. For this purpose the person responsible for unloading the boxes can step into the container via one of the hatches and if suitable waterproofs are worn there is no need for the container to be emptied of water.

The container can be lifted onto a transportation vehicle by means of a crane or other mechanical handling gear. As an alternative the container may be fitted with retractable legs such as 28 shown in broken line in Fig. 1 and otherwise designed for direct loading onto a vehicle which is backed beneath the container.

The container can be provided with a water inlet such as 29 and a water outlet such as 30 (Fig. 1) via which water can be circulated through the tank via a filter, for reasons hereinbefore described.

The container can be provided with coupling points by which it can be coupled to a mains source of cold and/or to a mains power supply. This can be useful e.g. for enabling a load to be kept refrigerated and aerated by using energy sources available on a ship in the event of the container being carried by sea or river.

In an alternative embodiment of the invention (not shown) the container serves as the integral load-carrying body of a vehicle equipped with tipping mechanism whereby the container can be tipped for discharging contents via a tailgate. Such a vehicle may be as illustrated in Fig. 1 of EP—A—0 005 353 but with the addition of an oxygenation system for oxygenating the water in the container.

The following is an example of a method according to the invention employed for transporting live spider crabs. The conditions applied in these examples can also be employed for transporting live brown crabs and lobsters although it will generally not be required to transport such large loads of lobsters and therefore for that purpose smaller capacity containers can be used.

Example 1

Apparatus as described with reference to the accompanying drawings incorporating a container having a total interior volume of 8150 litres and without interior partition walls 27 was used for transporting 3048 Kg of spider crabs which had been held for a few days in the sea in nets or rafts. The 3048 Kg load of crabs was divided into quantities each weighing between 13.6 and 20.4 Kg and each quantity was placed in a plastics basket large enough to hold that amount. The baskets were loaded into the container to form stacks distributed over its bottom area. High saline sea water (specific gravity above 1.023) at approximately the temperature of the water inhabited by the crabs prior to transfer to the baskets was then run into the container until the water level reached approximately 30 cm above the stacks of baskets. The crabs were in prime live condition when placed in the baskets and the filling of the baskets and their loading into the container was completed sufficiently quickly to ensure that the crabs did not become moribund.

The refrigeration plant and aeration system were put into operation immediately after completion of loading of the container. The refrigeration system was controlled so as slowly to reduce the temperature of the water to approximately 10°C and that temperature was maintained to within 3°C for as long as the crabs remained in the container. The aeration system was operated from the beginning to pump air into the water at a rate of approximately 6.2 litres (NTP) of air per minute per 28.3 litres of water. By this means the oxygen concentration of the whole volume of water was maintained at a high level. The oxygen concentration measured at the surface of the water was at least 80% of the saturation value. There was no circulation of the sea water out of and back into the container. Tests were made at intervals of time and it was found that even after 3 days, during which the container was transported by road, the mortality was only 12%. This was a far better result than can be achieved by previously known storage methods, even storage in running sea water in conventional shore tanks.

### Example 2

Apparatus as described with reference to the accompanying drawings was employed, the container having internal partition walls 27. The container was first partly filled with high saline sea water (about 21,200 litres) and the refrigeration and aeration systems were set in operation to maintain the water at approximately 10°C and to keep the water intensively oxygenated (more than 70% of the saturation level at the surface). About 5080 Kg of spider crabs were loaded directly from the sea (where they were confined by nets) into the container. The crabs were not first put into baskets or other receptacles. But the load was substantially uniformly distributed to the different compartments in the container. It was found that after 5 days, during which the container was transported by a road vehicle, more than 90% of the crabs were still in prime live condition. If circumstances require the removal of organic wastes during the storage in the container a water circulation system can be employed by which water is continuously withdrawn from an outlet 30 (Fig. 1) and pumped back into the container via inlet 29 after filtration, e.g. by a foam rubber filter held in an auxiliary tank.

In carrying out the present invention it is possible to use artificial sea water but in most circumstances it is important for economic reasons to use natural sea water.

### Claims

1. A method of transporting a load of living shell-fish destined for the food market, wherein the shell-fish are carried in a transportable thermally insulated container having a heat conducting skin exposed to the interior of the container, in which container the shell-fish are provided with sea water kept under cooled and aerated conditions, characterised in that the shell-fish to be transported and a volume of sea water are loaded into said container, the quantity of water being sufficient to submerge the load of shell-fish; in that the cooling is effected by a refrigeration system of skin-cooling type utilising fluid refrigerant which is conveyed by passageways extending along and in heat-conducting relationship to said heat-conducting skin thereby to cool the water substantially uniformly throughout its volume; and in that the aeration is effected by introducing air through a multiplicity of air discharge orifices distributed over the bottom area of the container to maintain a multiplicity of streams of air bubbles ascending through the sea water; the temperature and oxygen content of the water thereby being maintained at levels such as to keep at least the majority of the shell-fish alive until they are unloaded from the container.

2. A method of transporting a load of living shell-fish destined for the food market according to claim 1 characterised in that the water temperature in the container is maintained below the temperature of the normal sea water environment of the shell-fish in the summer fishing season; and in that the oxygen content of the sea water measured at the surface zone of the water in the container is maintained above 60% of the saturation value at the subsisting temperature of the water in the container.

3. A method according to claim 1 or 2, wherein the load in the container comprises at least 1016 Kg of crabs.

4. A method according to claim 1 or 2, wherein the load in the container comprises at least 152 Kg of lobsters.

5. A method according to any preceding claim, wherein the load of shell-fish in the container is at a storage density of at least 119 grams per litre of water.

6. A method according to any of claims 1 to 3, wherein the load of shell-fish in the container is distributed among stacked removable receptacles which however leave each quantity exposed to the water in which the receptacles are immersed.

7. A method according to claim 6, wherein air is discharged into the water from beneath each stack.

8. A method according to any preceding claim, wherein the oxygen content of the water measured at the surface zone of the water in the container is maintained at above 70% of the saturation value at the subsisting temperature of the water in the container.

9. A method according to any preceding claim, wherein said container is a bulk load-carrying body of a road vehicle.

10. Apparatus suitable for use in transporting a load of living shell-fish comprising a transportable thermally insulated container having a heat-conducting skin exposed to the interior of the container, and refrigeration and aeration systems, characterised in that the refrigeration system is of skin-cooling type comprising passageways extending along and in heat-conducting relationship to said heat conducting skin and means for causing fluid refrigerant to flow along said passageways; and in that the aeration system comprises a multiplicity of air discharge orifices distributed over the bottom area of the container and means for supplying air to such orifices from outside the container.

11. Apparatus according to claim 10, wherein gas supply passages leading to said orifices are arranged so as to be cooled by said refrigeration system.

12. Apparatus according to claim 10 or 11, wherein said refrigerant passageways are provided along opposed side walls and along the bottom of the container.

13. Apparatus according to any of claims 10 to 12, wherein said container forms the load-carrying body of a road vehicle.

**Revendications**

1. Procédé pour transporter un chargement de crustacés vivants, destiné à un marché d'alimentation, dans lequel les crustacés sont transportés dans un conteneur transportable, isolé thermiquement, comportant une feuille conductrice de la chaleur exposée à l'intérieur du conteneur, dans lequel conteneur les crustacés sont pourvus d'eau de mer maintenue refroidie et aérée caractérisé en ce que les crustacés devant être transportés et une quantité d'eau de mer sont chargés ledit conteneur, la quantité d'eau/étant suffisante pour immerger le chargement de crustacés; en ce que le refroidissement est effectué par un système de réfrigération du type à refroidissement de la feuille utilisant un fluide réfrigérant qui est transporté par des passages s'étendant le long de ladite feuille conductrice et en relation de conduction de la chaleur, le tout de manière à refroidir l'eau sensiblement uniformément dans tout son volume; et en ce que l'aération est effectuée en introduisant l'air par une multiplicité d'orifices de décharge de l'air répartis sur la surface de fond du conteneur pour maintenir un multiplicité de courants de bulles d'air montant au travers de l'eau de mer; la température et la teneur en oxygène de l'eau étant maintenues de cette façon à des niveau tels qu'au moins la plus grande partie des crustacés est maintenue en vie jusqu'à ce qu'ils soient déchargés hors du conteneur.

2. Procédé pour transporter un chargement de crustacés vivants, destiné aux marchés d'alimentation selon la revendication 1, caractérisé en ce que la température de l'eau dans le conteneur est maintenue en-dessous de l'environnement d'eau de mer normal des crustacés dans la saison de pêche estivale; et en ce que la teneur en oxygène de l'eau de mer mesurée à la zone de surface de l'eau dans le conteneur, est maintenue au-dessous de 60% de la valeur de saturation à la température subsistante de l'eau dans le conteneur.

3. Procédé selon la revendication 1 ou 2, dans lequel le chargement dans le conteneur comprend au moins 1016 Kg de crabes.

4. Procédé selon la revendication 1 ou 2, dans lequel le chargement dans le conteneur comprend au moins 152 Kg de homards.

5. Procédé selon l'une des revendications précédentes, dans lequel le chargement de crustacés dans le conteneur se trouve avec une densité de stockage d'au moins 119 grammes par litre d'eau.

6. Procédé selon l'une des revendications 1 à 3 dans lequel le chargement de crustacés dans le conteneur est réparti dans des réceptacles mobiles empilés qui laissent cependant chaque quantité exposée à l'eau dans laquelle les réceptacles sont immergés.

7. Procédé selon la revendication 6, dans lequel l'air est évacué dans l'eau à partir du dessous de chaque empilage.

8. Procédé selon l'une des revendications précédentes, dans lequel la teneur en oxygène de l'eau, mesurée dans la zone de surface de l'eau dans le conteneur est maintenue à plus de 70 % de la valeur de saturation à la température subsistante de l'eau dans le conteneur;

9. Procédé selon l'une des revendications précédentes, dans lequel ledit conteneur est une caisse portant le chargement en vrac d'un véhicule routier.

10. Appareil convenant pour être utilisé pour le transport d'un chargement de crustacés vivants, comprenant un conteneur transportable, isolé thermiquement, qui comporte une feuille conductrice de la chaleur, exposée à l'intérieur de conteneur, et des systèmes de réfrigération et d'aération, caractérisé en ce que le système de réfrigération est du type à refroidissement par feuille, comprenant des passages s'étendant le long de ladite feuille conductrice et avec une relation de conduction de la chaleur, et des moyens pour faire s'écouler le fluide réfrigérant par lesdits passages; et en ce que le système d'aération comprend une multiplicité d'orifices d'évacuation d'air répartis sur la surface de fond du conteneur et des moyens pour alimenter ces orifices en air à partir de l'extérieur du conteneur.

11. Appareil selon la revendication 10, dans lequel des perçages d'alimentation en gaz menant auxdits orifices sont disposés de façon à être refroidis par ledit système de réfrigération.

12. Appareil selon la revendication 10 ou 11, dans lequel lesdits passages à réfrigérant sont prévus le long des côtés latéraux et du fond du conteneur.

13. Appareil selon l'une quelconque des revendications 10 à 12, dans lequel ledit conteneur forme la caisse, portant le chargement, d'un véhicule routier.

**Patentansprüche**

1. Verfahren zum Transportieren von Ladungen lebender, für den Lebensmittelmarkt bestimmter Schalentiere, bei dem die Schalentiere in einem transportablen, wärmeisolierten Behälter mit einer dessen Innenraum ausgesetzten, wärmeleitenden Oberfläche befördert werden, wobei die Schalentiere in dem Behälter mit unter gekühlten und belüfteten Bedingungen gehaltenem Meerwasser versorgt sind, dadurch gekennzeichnet, dass die zu transportierenden Schalentiere und ein Volumen Meerwasser in besagten Behälter geladen werden, wobei eine genügende Wassermenge vorliegt, damit sich die Ladung von Schalentieren völlig unter Wasser befindet, dass die Kühlung mittels eines Kühlsystems vom Oberflächenkühlungstyp unter Verwendung eines flüssigen Kühlmittels erfolgt, welches über entlang besagter wärmeleitender Oberfläche verlaufende und damit in Wärmeaustausch stehende Durchgänge gefördert wird, um dadurch das Wasser im wesentlichen gleichmässig über sein gesamtes Volumen zu kühlen, und dass die Belüftung durch Einführung von Luft durch eine Vielzahl von über die Grundfläche des Behälters verteilten Luftauslassöffnungen erfolgt, um eine Vielzahl von durch das Meerwasser aufsteigenden Luftblasenströmen aufrechtzuerhalten, wodurch die Temperatur und der Sauerstoffgehalt des Wassers auf einer solchen Höhe gehalten werden, dass zumindest der grössere Teil der Schalentiere am Leben bleibt, bis sie aus dem Behälter ausgeladen werden.

2. Verfahren nach Anspruch 1 zum Transportieren von Ladungen lebender, für den Lebensmittelmarkt bestimmter Schalentiere, dadurch gekennzeichnet, dass man die Wassertemperatur im Behälter unterhalb der Temperatur der normalen Meerwasserumgebung der Schalentiere während der Sommerfischereizeit hält und dass man den am Oberflächenbereich des Wassers im Behälter gemessenen Sauerstoffgehalt des Meerwassers oberhalb 60% des Sättigungswerts bei der bestehenden Temperatur des Wassers im Behälter hält.

3. Verfahren nach Anspruch 1 oder 2, worin die Ladung im Behälter aus mindestens 1016 kg Krebsen besteht.

4. Verfahren nach Anspruch 1 oder 2, worin die Ladung im Behälter aus mindestens 152 kg Hummern besteht.

5. Verfahren nach einem der vorhergehenden Ansprüche, worin die Lagerdichte der Ladung Schaltentiere im Behälter mindestens 119 g pro Liter Wasser beträgt.

6. Verfahren nach einem der Ansprüche 1 bis 3, worin die Ladung Schaltentiere im Behälter über aufeinandergestapelte, herausnehmbare Behältnisse verteilt ist, die aber jeden Mengenanteil dem Wasser, in dem die Behältnisse eingetaucht sind, ausgesetzt belassen.

7. Verfahren nach Anspruch 6, worin Luft von unterhalb jeden Stapels in das Wasser eingeleitet wird.

8. Verfahren nach einem der vorhergehenden Ansprüche, worin man den am Oberflächenbereich des Wassers im Behälter gemessenen Sauerstoffgehalt des Wassers oberhalb 70% des Sättigungswerts bei der bestehenden Temperatur des Wassers im Behälter hält.

9. Verfahren nach einem der vorhergehenden Ansprüche, worin der besagte Behälter den lasttragenden Siloaufbau eines Strassenfahrzeugs darstellt.

10. Apparatur zur Verwendung beim Transportieren von Ladungen lebender Schalentiere, bestehend aus einem transportablen, wärmeisolierten Behälter mit einer dessen Innenraum ausgesetzten, wärmeleitenden Oberfläche sowie Kühl- und Belüftungssystemen, dadurch gekennzeichnet, dass das Kühlsystem dem Oberflächenkühlungstyp angehört und aus über entlang besagter wärmeleitender Oberfläche verlaufenden und damit in Wärmeaustausch stehenden Durchgängen sowie Mitteln zur Erzeugung einer Kühlmittelströmung entlang besagten Durchgängen besteht, und dass das Belüftungssystem aus einer Vielzahl von über die Grundfläche des Behälters verteilten Luftauslassöffnungen und Mitteln für die Luftzufuhr zu solchen Oeffnungen von ausserhalb des Behälters besteht.

11. Apparatur nach Anspruch 10, worin die in besagte Oeffnungen mündenden Gaszufuhrdurchgänge so angeordnet sind, dass sie durch das besagte Kühlsystem gekühlt werden.

12. Apparatur nach Anspruch 10 oder 11, worin die besagten Kühlmitteldurchgänge entlang gegenüberliegenden Seitenwänden und entlang dem Behälterboden vorgesehen sind.

13. Apparatur nach einem der Ansprüche 10 bis 12, worin dieser Behälter den lasttragenden Aufbau eines Strassenfahrzeugs bildet.

Fig.1

Fig.2

Fig.3

Fig.4

2